# EUROPÄISCHE PATENTSCHRIFT

(11) **EP 0 972 367 B1**
(45) Veröffentlichungstag und Bekanntmachung des Hinweises auf die Patenterteilung: **10.07.2002**
(21) Anmeldenummer: 98912211.4
(22) Anmeldetag: 13.02.1998
(51) Int. Cl.: H04J 14/02, H04Q 11/04, H04Q 11/00

(54) **ZUGANGSNETZ ZUR ÜBERTRAGUNG VON OPTISCHEN SIGNALEN**
ACCESS NETWORK FOR TRANSMITTING OPTICAL SIGNALS
RESEAU D'ACCES POUR LA TRANSMISSION DE SIGNAUX OPTIQUES

(30) Priorität: 09.04.1997 DE 19714650
(43) Veröffentlichungstag der Anmeldung: 19.01.2000
(73) Patentinhaber: ROBERT BOSCH GMBH, 70442 Stuttgart (DE)
(72) Erfinder: KOECK, Klaus, D-71522 Backnang (DE); SCHEUING, Ernst-Ulrich, D-71573 Allmersbach (DE); KREMERS, Ernst, D-71540 Murrhardt (DE); SCHWADERER, Bernhard, D-71554 Weissach (DE)
(74) Vertreter: Camp, Ronald
(86) Internationale Anmeldenummer: DE9800411
(87) Internationale Veröffentlichungsnummer: WO9845974

(56) Entgegenhaltungen:
- EP-A- 0 164 652
- EP-A- 0 488 241
- EP-A- 0 720 322
- WALTERS S M ET AL: "EVOLUTION OF FIBER ACCESS SYSTEMS TO ATM BROADBAND NETWORKING" PROCEEDINGS OF THE IEEE, Bd. 81, Nr. 11, 1. November 1993 (1993-11-01), Seiten 1588-1592, XP000421167
- HILBK U ET AL: "HIGH CAPACITY WDM OVERLAY ON A PASSIVE OPTICAL NETWORK" ELECTRONICS LETTERS, Bd. 32, Nr. 23, 7. November 1996 (1996-11-07), Seite 2162/2163 XP000643881
- HEIN B ET AL: "BROADBAND TRANSMISSION TECHNIQUES FOR THE LOCAL LOOP" FIBER OPTICS MAGAZINE, Januar 1993 (1993-01), Seiten 8-12, XP000198256
- EILENBERGER G J ET AL: "CONCEPTS FOR AN OPTICAL WDM TRANSPORT NETWORK AND EXPERIMENTAL RESULTS" ISS '95, WORLD TELECOMMUNICATIONS CONGRESS (INTERNATIONAL SWITCHING SYMPOSIUM), ADVANCED SWITCHING TECHNOLOGIES FOR UNIVERSAL TELECOMMUNICATIONS AT THE BEGINNING OF THE 21ST. CENTURY, BERLIN, APR. 23 - 28, 1995, Bd. 2, Nr. SYMP. 15, 23. April 1995 (1995-04-23), Seiten 377-381, XP000495686 VERBAND DEUTSCHER ELEKTROTECHNIKER (VDE) ET AL

## Beschreibung

Die Erfindung betrifft ein Zugangsnetz zur Übertragung von optischen Signalen nach dem Oberbegriff des Patentanspruchs 1.

Als Verteilungsknoten kommt insbesondere eine sogenannte OLT (Optical Line Termination) infrage, die - anders als eine Vermittlungsstelle - keine Vermittlungsfunktion im strengen Sinn der Vermittlung (call processing) hat. Das optische passive Netz endet insbesondere an einer sogenannten ONU (Optical Network Unit), einem optischen Netzabschluß, an den die Teilnehmer über Kupferleitungen angeschlossen sind.

### Stand der Technik

Es ist bekannt, für die Informations- beziehungsweise Datenübertragung in zunehmendem Maße auf Lichtwellenleiterbasis ausgebaute optische Netze einzusetzen. Hierbei wird üblicherweise ein übergeordnetes optisches Leitungsnetz verwendet, das eine Vielzahl von Vermittlungsstellen miteinander verbindet. Jede der Vermittlungsstellen hat ein Zugangsnetz zu Teilnehmern, die an die jeweilige Vermittlungsstelle angeschlossenen sind. Zwischen den Vermittlungsstellen und den Teilnehmeranschlüssen ist ein Lichtwellenleiternetz geschaltet, das heißt, dieses ist fest verlegt und lediglich zur Übertragung optischer Signale ohne Einfluß auf dieses geeignet. Da die Menge der zu übertragenden Informationen und/oder Daten, beispielsweise bei interaktiven Multimediadiensten, zu einem steigenden Bedarf an Übertragungskapazitäten führt, müssen die Lichtwellenleiternetze so ausgelegt sein, daß sie diesen steigenden Übertragungskapazitäten Rechnung tragen können.

Aus Westphal,Hermes, Hilbk, Saniter: WDM-Konzept im Zugangsnetz, Tagungsband ITG-Workshop Teilnehmerzugangsnetze, Berlin, 4.11.96, Seite 26 bis 30, ist bekannt, eine Kapazitätserweiterung von bestehenden passiven optischen Zugangsnetzen (Lichtwellenleiternetze) zu erreichen, indem einem schmalbandigen passiven optischen Netz mit bidirektionalem Berieb in einem bestimmten Wellenlängenbereich ein weiteres bidirektionales passives optisches Netz in einem anderen Wellenlängenbereich im gleichen Lichtwellenleiternetz überlagert wird. So können mittels einer Leitungsinstallation wenigstens zwei passive optische Netze durch sich unterscheidende Wellenlängenbereiche genutzt werden. Hierbei ist jedoch nachteilig, daß jedem optischen Netzabschluß neben dem allgemein zugänglichen, passiven optischen Netz des ersten Wellenlängenbereichs ein individuelles Wellenlängenpaar für das in dem anderen Wellenlängenbereich das erste passive optische Netz überlagernde passive optische Netz zugeordnet werden muß. Somit sind Erweiterungen und/oder Änderungen der angeschlossenen Teilnehmer mit einem relativ hohen Aufwand verbunden, da die individuellen Wellenlängenpaare neu vergeben werden müssen.

In der EP-A-0720322 ist ein optisches Kommunikationsnetz beschrieben, das Teilnehmern über optische Fasern den Zugriff von ihren optischen Netzabschlüssen auf einen optischen Zugriffsknoten erlaubt. Die Vebindungen zwischen dem Zugriffsknoten und einer Vermittlungsstelle werden über optische Fasern hergestellt, welche optische Signale entsprechend der Anzahl der Teilnehmer übertragen, und zwar mittels Wellenlängen-Multiplex. Dieses Netz erlaubt einen Zugriff auf alle Arten von Kommunikationsdiensten, wobei jeder Dienst eine eigene Wellenlänge benutzt für seine Verbindung zwischen dem Zugriffsknoten und dem optischen Netzabschluss. Diese eigene Wellenlänge ist fest zugeteilt und hängt nur von der Art des Dienstes ab.

In PROCEEDINGS OF THE IEEE, Bd. 81, Nr. 11, 01.11.1993, Seiten 1588 bis 1592; S. M. Walters et al. ist im Szenarium A die prinzipielle Trennung von Schmalband- und Breitbanddiensten durch getrennte Sendeeinheiten und Empfangseinheiten unter Nutzung des Wellenlängen-Multiplex beschrieben. Zielrichtung ist es dabei, durch die Einführung von ATM, indem auch die Schmalbanddienste über ATM übertragen werden, WDM-Technik einzusparen.

Die EP-A-0164652 betrifft ein optisches Übertragungssystem zur doppeltgerichteten Übertragung von teilnehmerindividuellen Nachrichten zwischen einer Zentrale und mehreren Teilnehmern. Lichtwellenleiter einer Gruppe von räumlich benachbarten Teilnehmern werden in einer Vorfeldeinrichtung über Wellenlängenmultiplexer/demultiplexer an einen gemeinsamen Lichtwellenleiter angekoppelt, der mit der Zentrale verbunden ist, und jedem Teilnehmer ist eine eigene Wellenlänge oder ein eigener Bereich von Wellenlängen individuell zugeordnet. Dabei ist aber nicht an die Aufrüstung eines bereits bestehenden Glasfasersystems gedacht.

### Vorteile der Erfindung

Das erfindungsgemäße Leitungsnetz mit den im Anspruch 1 genannten Merkmalen bietet demgegenüber den Vorteil, daß in einem fest installierten Leitungsnetz von Lichtwellenleitern mehrere passive optische Netze betrieben werden können, ohne daß es einer individuellen Zugangsvoraussetzung bedarf. Dadurch, daß im optischen Verteilungsknoten und dem optischen Netzabschluß jeweils eine Einrichtung zum getrennten Empfang und Senden von Signalen in mehreren Wellenlängenbereichen vorgesehen sind, ist jederzeit eine Verbindung in den einzelnen unterschiedlichen Wellenlängenbereichen aufbaubar. Es ist eine virtuelle, transparente optische Punkt-Zu-Punkt-Verbindung zwischen verschiedenen optischen Netzabschlüssen in unterschiedlichen Wellenlängenbereichen sowohl innerhalb des gleichen Zugangsnetzes als auch über das übergeordnete Netz mit anderen Zugangsnetzen möglich. Insbesondere ist so ein zukunftssicheres System passiver optischer Netze geschaffen, deren Kapazitätserweiterung jederzeit durch die Aufnahme neuer Wellenlängenbereiche möglich ist.

In bevorzugter Ausgestaltung der Erfindung ist vorgesehen, daß die Einrichtungen zum getrennten Empfang und Senden von Signalen für einen Wellenlängen-Multiplex-Betrieb ausgelegt sind und vorzugsweise modulartig aufgebaut sind. Hierdurch kann einerseits durch den Wellenlängen-Multiplex-Betrieb der Aufwand zum Ausstatten der optischen Verteilungsknoten und/oder der optischen Netzabschlüsse auch bei einer Vielzahl von verwendeten Wellenlängenbereichen relativ gering gehalten werden. Durch den modularen Aufbau kann darüber hinaus je nach tatsächlichem Bedarf an entsprechenden Wellenlängenbereichen eine Aufrüstung durch einfache Steckvorgänge erfolgen. Somit sind bestehende Lichtwellenleiternetze flexibel einsetzbar und jederzeit ohne großen Aufwand an neue Bedingungen, insbesondere an den' Betrieb mehrerer passiver optischer Netze, anpaßbar.

In weiterer bevorzugter Ausgestaltung der Erfindung ist vorgesehen, daß wenigstens eine der innerhalb des Zugangsnetzes verwendeten Lichtquellen als Referenz-Lichtquelle für die weiteren zum Senden von Signalen innerhalb des Zugangsnetzes verwendeten Lichtquellen genutzt wird. Bevorzugterweise bildet die Lichtquelle der Standardsendeeinheit des Zugangsnetzes die Referenz-Lichtquelle. Durch das Definieren einer Referenz-Lichtquelle wird es möglich, die weiteren, zusätzlich innerhalb des Zugangsnetzes betriebenen Lichtwellenlängen auf die Lichtwellenlänge der Referenzlichtquelle abzustimmen, so daß der notwendige Mindestabstand zwischen den Lichtwellenlängen unterschiedlicher Sendeeinrichtungen eingehalten wird. Hierdurch werden Beeinflussungen der Signale unterschiedlicher Lichtwellenlängen untereinander, und damit eine Beeinträchtigung der Informationsübertragung, vermieden.

Vorteilhafte Ausgestaltungen der Erfindung ergeben sich aus den übrigen in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: schematisch den Aufbau eines passiven optischen Netzes;
- Figur 2: eine erste Ausbaustufe des passiven optischen Netzes;
- Figur 3: eine zweite Ausbaustufe des passiven optischen Netzes;
- Figur 4: eine dritte Ausbaustufe des passiven optischen Netzes und
- Figur 5: eine schematische Ansicht eines System-verbundes passiver optischer Netze.

### Beschreibung der Ausführungsbeispiele

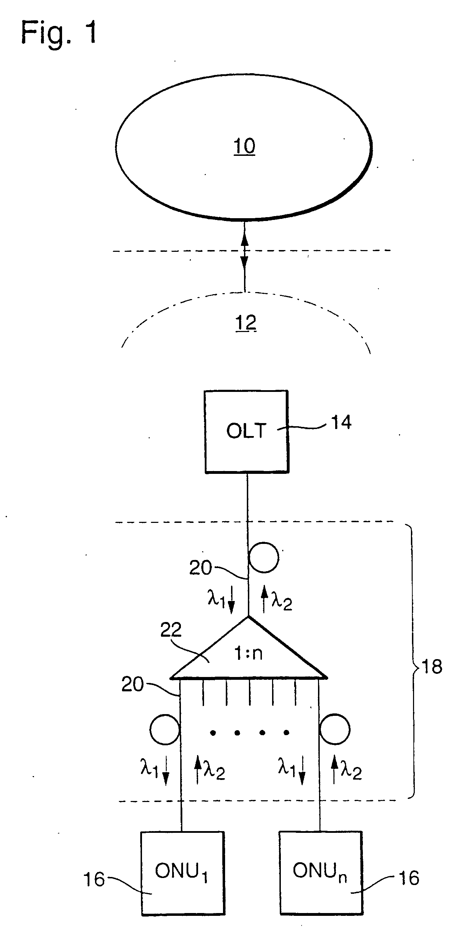

In Figur 1 ist schematisch die Grundkonstellation eines Netzes zur Datenübertragung mit einem passiven optischen Netz gezeigt. Von einem übergeordneten Transportnetz 10 gehen untergeordnete Zugangsnetze 12 ab. Das Zugangsnetz 12 besitzt einen optischen Verteilungsknoten 14 (OLT - optical line termination) und optische Netzabschlüsse 16 (ONU - optical network unit), ONU1 bis ONUn, die über ein passives optisches Netz 18 miteinander verbunden sind. Das passive optische Netz 18 besteht aus Lichtleitfasern 20 und wenigstens einem Verzweiger 22. Entsprechend der Größe und der Struktur des Zugangsnetzes 12 sind eine entsprechende Anzahl von Verzweigern 22 und von die Verzweiger 22 mit den optischen Verzweigungsknoten 14 beziehungsweise den optischen Netzabschlüssen 16 verbindenden Lichtleitfasern 20 vorhanden. Im gezeigten Beispiel wird von einem Sternnetz ausgegangen, wobei klar ist, daß auch andere Netzkonfigurationen, beispielsweise Ringnetze, Baumnetze, möglich sind.

Der Betrieb des passiven optischen Netzes 18 erfolgt bidirektional, wobei in einer Richtung eine Wellenlänge λ1 von beispielsweise 1550 nm und in der entgegengesetzten Richtung eine Wellenlänge λ2 von beispielsweise 1310 nm zur Übertragung von Informationen und/oder Daten eingesetzt wird.

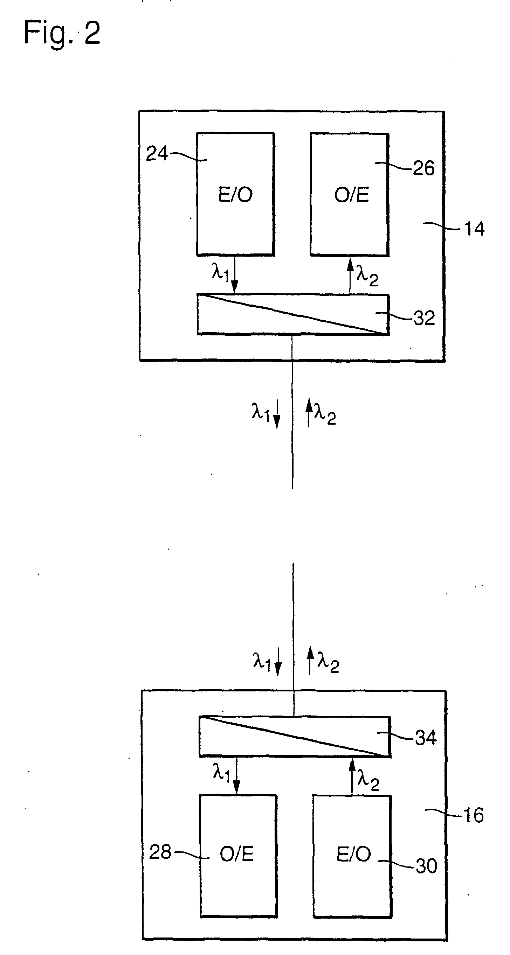

In Figur 2 ist der Aufbau des optischen Verteilungsknotens 14 und eines optischen Netzabschlusses 16 verdeutlicht, wobei klar ist, daß jedem optischen Verteilungsknoten 14 eine Vielzahl von optischen Netzabschlüssen 16 zugeordnet sind, die über den Verteiler 22 bedient werden. Der optische Verteilungsknoten 14 besitzt einen Sender 24 zum Senden der Signale mit der Wellenlänge λ1 und einen Empfänger 26 zum Empfangen der Signale mit der Wellenlänge λ2. Der optische Netzabschluß 16 besitzt einen Empfänger 28 zum Empfangen der Signale mit der Wellenlänge λ1 und einen Sender 30 zum Senden der Signale mit der Wellenlänge λ2. Zur Richtungstrennung ist jeweils ein breitbandiger Wellenlängerfilter 32 beziehungsweise 34 in den optischen Verteilungsknoten 14 beziehungsweise den optischen Netzabschluß 16 integriert. Weitere für die Funktion des optischen Verteilungsknoten 14 beziehungsweise der optischen Netzabschlüsse 16 notwendige elektrische Funktionsblöcke wurden aus Gründen der Übersichtlichkeit nicht dargestellt. Die Übertragung der Signale mit den Wellenlängen λ1 und λ2 erfolgt nach dem bekannten TDM-TDMA-Verfahren, so daß auf eine detailliertere Beschreibung der Übertragungsverfahren nicht eingegangen zu werden braucht.

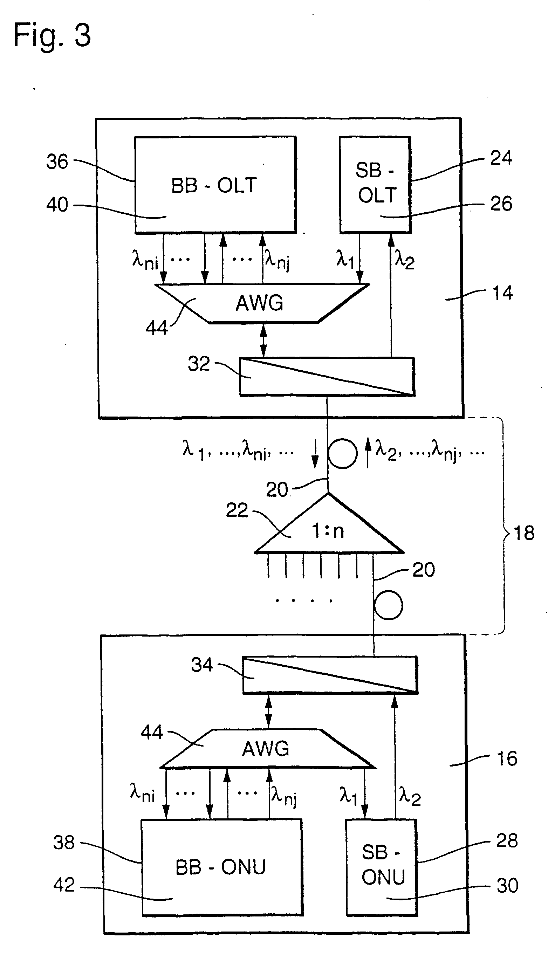

Anhand von Figur 3 wird die erfindungsgemäße Kapazitätserweiterung des passiven optischen Netzes 18 beziehungsweise des gesamten Zugangsnetzes 12 erläutert. Das passive optische Netz 18 besteht unverändert aus den Lichtleitfasern 20 und den Verzweigern 22. Der optische Verteilungsknoten 14 und die optischen Netzabschlüsse 16 besitzen einerseits die in den Figuren 1 und 2 erläuterte Struktur und weisen zusätzlich eine Einrichtung 36 beziehungsweise 38 auf, die aus einer Breitband-OLT (BB-OLT - broadband optical line termination) 40 in dem optischen Verteilungsknoten 14 beziehungsweise einer Breitband-ONU (BB-ONU - broadband optical network unit) 42 und optischen Multiplexern/Demultiplexern 44 besteht. Die Multiplexer/Demultiplexer 44 sind zwischen die Wellenlängenfilter 32 beziehungsweise 34 und den Sende-Empfängereinheiten 24, 26 beziehungsweise 28, 30 geschaltet. Die Multiplexer/Demultiplexer 44 sind für einen dichten Wellenlängenbetrieb (WDM/MUX) ausgelegt und arbeiten beispielsweise auf der Basis von arrayed-waveguide-gratings (AWG) in einem Wellenlängenbereich von beispielsweise etwa 1520 bis 1580 nm. Durch eine derartige Ausstattung des optischen Verteilungsknotens 14 und der optischen Netzabschlüsse 16 sind Übertragungen über das passive optische Netz 18 in Wellenlängenbereichen von λ1 bis λni in Richtung der optischen Netzabschlüsse 16 und Wellenlängen λ 2 bis λnj in Richtung des optischen Verteilungsknotens 14 möglich. Typischerweise sind Informations- und/oder Datenübertragungen mit bis zu zehn Weilenlängen in einem Wellenlängenfenster mit einer Breite von 20 bis 40 nm möglich. Die Einrichtungen 36 und 38, insbesondere die Breitband-OLT 40 und Breitband-ONU 42 enthalten die entsprechenden Sende- und Empfängereinheiten, die auf die verwendeten Wellenlängenbereiche λ abgestimmt sind.

Selbstverständlich sind auch andere Ausstattungsvarianten des optischen Verteilungsknotens 14 beziehungsweise der optischen Netzabschlüsse 16 möglich, die einen Multiplex-Demultiplexbetrieb in mehreren Wellenlängenbereichen, die auch von den genannten Wellenlängenbereichen abweichen können, erlauben.

Trotz der Erweiterung des optischen Verteilungsknotens 14 und der optischen Netzabschlüsse 16 ist das passive optische Netz 18 in seiner Leitungsstruktur unverändert. Somit ist bei Aufrüstung von Zugangsnetzen 12 auf den Multiplexbeziehungsweise Demultiplexbetrieb von mehreren Wellenlängenbereichen eine Nachrüstung beziehungsweise Anpassung des passiven optischen Netzes 18 nicht erforderlich.

In sehr vorteilhafter Weise können die Einrichtungen 36 und 38 mit ihren Breitband-OLT 40 beziehungsweise Breitband-ONU 42 und den Multiplexern/Demultiplexern 44 modular aufgebaut sein, das heißt, jedem Wellenlängenbereich λ ist ein Modulbaustein zugeordnet. Hierdurch brauchen bei Erweiterung eines Zugangsnetzes 12 auf mehrere Wellenlängenbereiche entweder bei dem optischen Verteilungsknoten 14 und/oder bei den optischen Netzabschlüssen 16 jeweils nur die, für einen Betrieb im vorgesehenen Wellenlängenbereich, entsprechenden Einrichtungen 36 beziehungsweise 38 ergänzt zu werden. Durch Vorsehen entsprechender Steckplätze kann diese Erweiterung ohne großen Montageaufwand und ohne Beeinträchtigung der bereits vorhandenen Komponenten in dem optischen Verteilungsknoten 14 beziehungsweise den optischen Netzabschlüssen 16 erfolgen.

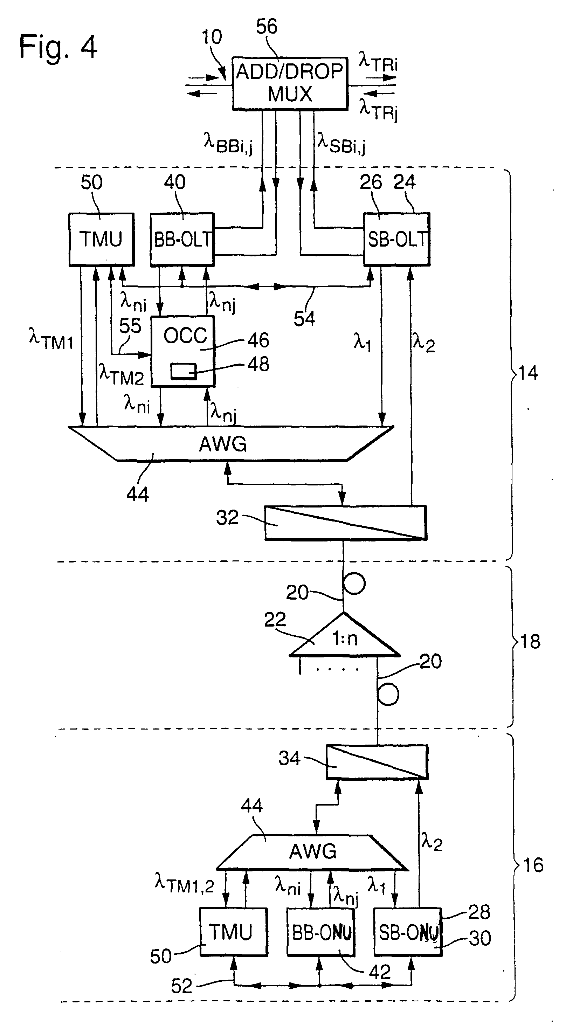

Eine noch weitergehende Kapazitätserweiterung eines Zugangsnetzes 12 unter Beibehaltung der Struktur des passiven optischen Netzes 18 ist in Figur 4 gezeigt. Gleiche Teile wie in den vorhergehenden Figuren sind mit gleichen Bezugszeichen versehen und nicht nochmals erläutert. Zusätzlich zu der in Figur 3 gezeigten Ausführungsvariante ist eine optische Schaltmatrix 46 (OCC - optical cross connect) vorgesehen, die zwischen dem Multiplexer/Demultiplexer 44 und dem Breitband-OLT 40 geschaltet ist. Die Schaltmatrix 46 kann zusätzlich einen optischen Frequenzumsetzer 48 aufweisen, der für eine Umsetzung der Wellenlängen von λnj auf λni eingesetzt werden kann. Hierdurch wird es möglich, jede beliebige Wellenlänge λ innerhalb des Zugangsnetzes 12 zu schalten und so jede beliebige transparente Punkt-Zu-Punkt-Verbindung innerhalb des Zugangsnetzes 12 zu realisieren.

So können beispielsweise von einem optischen Netzabschluß 16 in einem bestimmten Wellenlängenbereich λnj übermittelte Informationen, die für einen weiteren optischen Netzabschluß 16 des gleichen Zugangsnetzes 12 bestimmt sind, mittels des Freqüenzumsetzers 48 in einen Wellenlängenbereich λni umgesetzt werden und dann über die Schaltmatrix 46 in die Lichtwellenleiter 20 wieder eingespeist werden. Gegebenenfalls kann die Umsetzung in eine, einem bestimmten optischen Netzabschluß 16 zugeordnete Wellenlänge λni erfolgen.

Ferner besitzt der optische Verteilungsknoten 14 eine Einheit 50, die als Teilnehmer-Management-Unit (TMU) vorgesehen ist. Über die Einheit 50 können auf speziellen reservierten Wellenlängen λTM1 beziehungsweise λTM2 innerhalb des Zugangsnetzes 12 bestimmte Managementaufgaben übernommen werden, die beispielsweise Serviceaufgaben des Betreibens des Zugangsnetzes 12, eine Verwaltung und eine Überwachung sowie eine Zuordnung von bestimmten Wellenlängen λni beziehungsweise λnj zu bestimmten Informations- und/oder Datenübertragungen sein können. Darüber hinaus ist die Einheit 50 geeignet, Protokolle für die gesicherte Übertragung von Informationen beziehungsweise Daten zu übermitteln. Um diese Aufgaben erledigen zu können, ist die Einheit 50 einerseits mit dem Multiplexer/Demultiplexer 44 verbunden und steuert andererseits über eine bidirektionale Signalleitung 55 die optische Schaltmatrix 46.

In vollkommen analoger Weise können die optischen Netzabschlüsse 16 ebenfalls eine Einheit 50 aufweisen. Diese ist über eine bidirektionale Signalleitung 52 mit der Breitband-ONU 42 und der Schmalband-ONU 28, 30 gekoppelt. Ferner ist in dem optischen Verteilungsknoten 14 eine bidirektionale Signalleitung 54 vorgesehen, die einem internen Informationsaustausch zur Steuerung der einzelnen Komponenten des optischen Verteilungsknotens 14 dient.

Das aus dem optischen Verteilungsknoten 14, dem passiven optischen Netz 18 und den optischen Netzabschlüssen 16 bestehende Zugangsnetz 12 ist in das übergeordnete Transportnetz 10 eingekoppelt. Hierzu ist ein Add/Drop-Multiplexer 56 vorgesehen, über den übertragene Informationen und/oder Daten in bestimmten Wellenlängenbereichen λBBij (Breitband) beziehungsweise λSBij (Schmalband), also für das Zugangsnetz 12, bestimmte Breitband- beziehungsweise Schmalbandinformationen aus den gesamten über das Transportnetz 10 transportierten Informationen und/oder Daten auf den Wellenlängenbereichen λTRi beziehungsweise λTRj aus- beziehungsweise eingelesen werden können.

Anhand der in Figur 4 gezeigten Konfiguration wird deutlich, daß unabhängig vom Ausbau des optischen Verteilungsknotens 14 und der optischen Netzabschlüsse 16 der ursprüngliche Schmalbandbetrieb (Figuren 1, 2) aufrechterhalten bleibt, da die Verknüpfung in diesem Bereich lediglich über passive optische Bauelemente über das passive optische Netz 18 erfolgt.

Insgesamt wird durch den modularen Aufbau eine nutzerspezifischen Aufrüstung des Zugangsnetzes 12, insbesondere des optischen Verteilungsknotens 14 und/oder der optischen Netzabschlüsse 16 je nach Bedarf möglich, ohne daß es einer Anpassung oder Umstrukturierung des passiven optischen Netzes 18 bedarf.

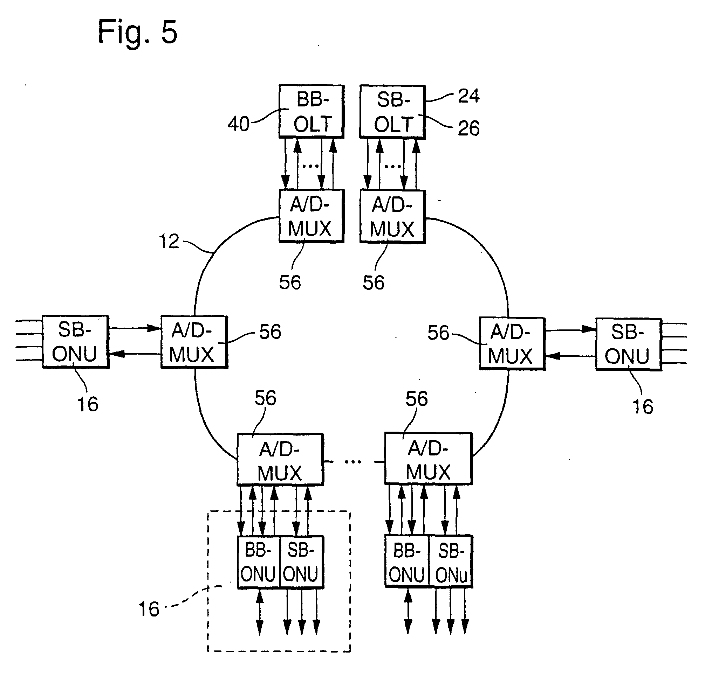

Anhand von Figur 5 wird die universelle Einsetzbarkeit der Kapazitätserweiterungsmöglichkeiten der Zugangsnetze 12 an einem Zugangsnetz 12 mit Ringstruktur verdeutlicht.

Beispielhaft soll angenommen werden, daß ein niederbitratiger optischer SDH-Ring 12 von einer Kapazität von 155 Mbit/s (STM 1) über 622 Mbit/s (STM 4) auf größer 2,5 Gbit/s (STM 16) erfolgen soll. Dies wird erreicht, indem ausgehend von der Anbindung von optischen Netzabschlüssen 16 über Add/Drop-Multiplexer 56 in das Zugangsnetz 12 ein optischer Verteilungsknoten 14 mit einem Breitband-OLT 40 und einem Schmalband-OLT 24, 26 in das ringförmige Zugangsnetz 12 über Add/Drop Multiplexer 56 eingekoppelt werden. Je nach Bandbreitenbedarf der einzelnen Teilnehmer pro optischen Netzabschluß 16 kann eine Bitratenerhöhung für die Schmalband-ONU 28, 30 vorgenommen werden, oder es kann wenigstens eine zusätzliche Wellenlänge λni, λnj in das Zugangsnetz 12 eingespeist werden. Diese Vorgänge werden über die in Figur 5 aus Übersichtlichkeitsgründen nicht dargestellten Einheiten 50 gesteuert. So ist es möglich, an einem ringförmigen Zugangsnetz 12 gleichzeitig Schmalband-ONUs 28, 30 (Figur 2) als auch Breitband-ONUs 42 (Figur 4) zu betreiben.

Nach weiteren, nicht dargestellten Ausführungsbeispielen kann auch eine Verknüpfung von Zugangsnetzen 12 mit ringförmiger und sternförmiger oder baumförmiger Struktur erfolgen. Die ringförmige Struktur würde dann als Zubringernetz für daran angeschlossene sternförmige Zubringernetze 12 dienen.

Weiterhin können Reichweitenprobleme, die eventuell im Zusammenhang mit der Erfindung auftreten, durch die Einfügung von optischen Verstärkern an geeigneten Stellen innerhalb des optischen Verteilungsknotens 14 beziehungsweise des optischen Netzabschlusses 16 ausgeglichen werden.

Befinden sich optische Verstärker innerhalb des passiven optischen Netzes 18, so sind diese transparent für beide Übertragungsrichtungen auszuführen. Das Netz ist dann nicht mehr rein passiv, aber bezüglich der Signalübertragung verhält es sich aufgrund der Richtungstransparenz wie ein "passives Netz".

## Patentansprüche

1. Zugangsnetz zur Übertragung von optischen Signalen mit einem passiven optischen Netz, das zwischen wenigstens einen optischen Netzabschluß (16) und wenigstens einen optischen Verteilungsknoten (14) geschaltetet ist, wobei der Verteilungsknoten (14) mit einem übergeordneten Netz oder einer Vermittlungsstelle verbunden ist, eine bidirektionale Übertragung von optischen Signalen in wenigstens zwei Wellenlängenbereichen erfolgt,
im optischen Verteilungsknoten (14) und im optischen Netzabschluß (16) jeweils eine Einrichtung (36, 38) zum getrennten Empfangen und Senden von Signalen in mehreren Wellenlängenbereichen (λni, λnj) vorgesehen ist und diese Einrichtungen (36, 38) für Multiplex/Demultiplex-Betrieb ausgelegt sind,
**dadurch gekennzeichnet,**
**daß** der Einrichtung (36) des optischen Verteilungsknotens (14) eine optische Schaltmatrix (46) zugeordnet ist, die zwischen eine Breitband-OLT (40) (broadband optical line termination) des Verteilungsknotens (14) und dessen Multiplexer/Demultiplexer (44) geschaltet ist,
**daß** der optische Verteilungsknoten (14) und der optische Netzabschluß (16) jeweils eine Einheit (50) aufweisen, die eine Management-Einheit zum Betrieb und/oder zur Überwachung und/oder Verwaltung des Zugangsnetzes (12) bildet,
**daß** die Einrichtung (36) des optischen Verteilungsknotens (14) eine Breitband-OLT (40) aufweist, die über einen Multiplexer/Demultiplexer (44) mit einem Wellenlängenfilter (32) des optischen Verteilungsknotens (14) verbunden ist,
**daß** die Einrichtung (38) des optischen Netzabschlusses (16) eine Breitband-ONU (42) (broadband optical network unit) aufweist, die über einen Multiplexer/Demultiplexer (44) mit einem Wellenlängenfilter (34) des optischen Netzabschlusses (16) verbunden ist,
**daß** wenigstens eine innerhalb des Zugangsnetzes (12) betriebene Lichtquelle als Referenz-Lichtquelle für alle weiteren innerhalb des Zugangsnetzes betriebene Lichtquellen dient.

2. Zugangsnetz nach Anspruch 1, **dadurch gekennzeichnet, daß** die Multiplexer/Demultiplexer (44) für einen dichten Wellenleiterbetrieb (WDM/MUX) ausgelegt sind.

3. Zugangsnetz nach Anspruch 1 oder 2, **dadurch gekennzeichnet, daß** die Multiplexer/Demultiplexer (44) auf der Basis von arrayed-waveguide-gratings (AWG) arbeiten.

4. Zugangsnetz nach einem der vorangehenden Ansprüche, **dadurch gekennzeichnet, daß** die Einrichtungen (36, 38) modular aufgebaut sind.

5. Zugangsnetz nach Anspruch 4, **dadurch gekennzeichnet, daß** Modulbausteine in Steckplätze des optischen Verteilungsknotens (14) und/oder des optischen Netzabschlusses (16) einsteckbar sind.

6. Zugangsnetz nach Anspruch 5, **dadurch gekennzeichnet, daß** für jeden Wellenlängenbereich (λ) ein Baustein vorgesehen ist, so dass die optischen Verteilungsknoten (14) und/oder die optischen Netzabschlüsse (16) modular erweiterbar sind.

7. Zugangsnetz nach einem der vorangehenden Ansprüche, **dadurch gekennzeichnet, daß** die Schaltmatrix (46) einen optischen Frequenzumsetzer (48) aufweist.

8. Zugangsnetz nach einem der vorangehenden Ansprüche, **dadurch gekennzeichnet, daß** das Zugangsnetz (12) eine Sternstruktur und/oder Ringstruktur und/oder Baumstruktur aufweist.

9. Zugangsnetz nach einem der vorangehenden Ansprüche, **dadurch gekennzeichnet, daß** die Lichtquelle einer Standard-OLT (14) oder einer Standard-ONU (16) mit ihrer jeweiligen Wellenlänge (λ1, λ2) als Referenzlichtquelle dient.

10. Zugangsnetz nach einem der vorangehenden Ansprüche, **dadurch gekennzeichnet, daß** das passive optische Netz ein Lichtwellenleiternetz ist.

11. Zugangsnetz nach dem vorangehenden Anspruch, **dadurch gekennzeichnet, daß** im Lichtwellenleiternetz eine optische Verstärkung erfolgt.

12. Zugangsnetz nach einem der vorangehenden Ansprüche, **dadurch gekennzeichnet, daß** in den optischen Verteilungsknoten (14) und/oder im optischen Netzabschluß (16) eine optische Verstärkung erfolgt.

## Claims

1. Access network for transmitting optical signals having a passive optical network connected between at least one optical network termination (16) and at least one optical distribution node (14), whereby the distribution node (14) is connected to a higher order network or an exchange, bidirectional transmission of optical signals takes place in at least two wavelength ranges, in the optical distribution node (14) and in the optical network termination (16), respectively, a device (36, 38) is provided for separate receiving and transmitting of signals in a plurality of wavelength ranges (λni, λnj) and these devices (36, 38) are configured for multiplex/demultiplex operation, **characterised in that** assigned to the device (36) of the optical distribution node (14) is an optical switching matrix (46) connected between a broadband OLT (40) (optical line termination) of the distribution node (14) and the multiplexer/demultiplexer (44) of the latter, that the optical distribution node (14) and the optical network termination (16) each have a unit (50) comprising a management unit for operating and/or monitoring and/or administrating the access network (12), that the device (36) of the optical distribution node (14) has a broad-band OLT (40) connected via a multiplexer/demultiplexer (44) to a wavelength filter (32) of the optical distribution node (14), that the device (38) of the optical network termination (16) has a broad-band ONU (42) (optical network unit) connected via a multiplexer/demultiplexer (44) to a wavelength filter (34) of the optical network termination (16), that at least one light source operated within the access network (12) serves as reference light source for all other light sources operated within the access network.

2. Access network according to Claim 1, **characterised in that** the multiplexer/demultiplexers (44) are configured for dense optical fibre operation (WDM/MUX).

3. Access network according to Claim 1 or 2, **characterised in that** the multiplexers/demultiplexers (44) operate on the principle of arrayed waveguide gratings (AWGs).

4. Access network according to one of the previous claims, **characterised in that** the devices (36, 38) are of modular design.

5. Access network according to Claim 4, **characterised in that** module building blocks may be inserted into plug-in slots in the optical distribution node (14) and/or the optical network termination (16).

6. Access network according to Claim 5, **characterised in that** for each wavelength region (λ), a building block is provided so that the optical distribution nodes (14) and/or the optical network terminations (16) may be expanded in modular fashion.

7. Access network according to one of the previous claims, **characterised in that** the switching matrix (46) has an optical frequency converter (48).

8. Access network according to one of the previous claims, **characterised in that** the access network (12) has a star structure and/or a ring structure and/or a tree structure.

9. Access network according to one of the previous claims, **characterised in that** the light source of a standard OLT (14) or a standard ONU (16) with its respective wavelength (λ1, λ2) serves as reference light source.

10. Access network according to one of the previous claims, **characterised in that** the passive optical network is an optical fibre network.

11. Access network according to one of the previous claims, **characterised in that** optical amplification takes place in the optical fibre network.

12. Access network according to one of the previous claims, **characterised in that** in the optical distribution nodes (14) and/or in the optical network termination (16), optical amplification takes place.

## Revendications

1. Réseau d'accès pour la transmission de signaux optiques avec un réseau optique passif qui est installé entre au moins une unité de raccordement au réseau optique (16) et au moins un noeud de distribution optique (14), le noeud de distribution (14) étant relié à un réseau supérieur ou à une centrale de commutation, une transmission bidirectionnelle des signaux optiques ayant lieu dans au moins deux plages de longueurs d'onde, un dispositif (36, 38) destiné à une réception et une émission séparées de signaux dans plusieurs plages de longueurs d'onde (λni, λnj) étant prévu à la fois dans le noeud de distribution optique (14) et l'unité de raccordement au réseau optique (16) et ces dispositifs (36, 38) étant conçus pour une exploitation avec multiplexage/démultiplexage, **caractérisé en ce que**
une matrice de commutation optique (46), qui est montée entre une OLT à large bande (40) (broadband optical line termination - terminaison de ligne optique à large bande) du noeud de distribution (14) et le multiplexeur/démultiplexeur (44) de ce dernier, est affectée au dispositif (36) du noeud de distribution optique (14),
le noeud de distribution optique (14) et l'unité de raccordement au réseau optique (16) présentent chacun une unité (50) qui forme une unité de gestion pour l'exploitation et/ou la surveillance et/ou l'administration du réseau d'accès (12),
le dispositif (36) du noeud de distribution optique (14) présente une OLT à large bande (40) qui est reliée via un multiplexeur/démultiplexeur (44) à un filtre de longueurs d'onde (32) du noeud de distribution optique (14),
le dispositif (38) de l'unité de raccordement au réseau optique (16) présente une ONU à large bande (42) (broadband optical network unit - unité de raccordement au réseau optique) qui est reliée via un multiplexeur/démultiplexeur (44) à un filtre de longueurs d'onde (34) de l'unité de raccordement au réseau optique (16),
au moins une source lumineuse exploitée à l'intérieur du réseau d'accès (12) sert de source lumineuse de référence pour toutes les autres sources lumineuses exploitées à l'intérieur du réseau d'accès.

2. Réseau d'accès selon la revendication 1, **caractérisé en ce que** les multiplexeurs/démultiplexeurs (44) sont conçus pour une exploitation avec des longueurs d'onde rapprochées (MRL/MUX).

3. Réseau d'accès selon la revendication 1 ou 2, **caractérisé en ce que** les multiplexeurs/démultiplexeurs (44) travaillent sur la base de arrayed-waveguide-gratings (AWG).

4. Réseau d'accès selon l'une quelconque des revendications précédentes, **caractérisé en ce que** les dispositifs (36, 38) présentent une structure modulaire.

5. Réseau d'accès selon la revendication 4, **caractérisé en ce que** les blocs modulaires sont enfichables dans des emplacements du noeud de distribution optique (14) et/ou de l'unité de raccordement au réseau optique (16).

6. Réseau d'accès selon la revendication 5, **caractérisé en ce qu'**il est prévu un module pour chaque plage de longueurs d'onde (λ) de telle sorte que les noeuds de distribution optique (14) et/ou les unités de raccordement au réseau optique (16) sont extensibles de manière modulaire.

7. Réseau d'accès selon l'une quelconque des revendications précédentes, **caractérisé en ce que** la matrice de commutation (46) présente un convertisseur de fréquence optique (48).

8. Réseau d'accès selon l'une quelconque des revendications précédentes, **caractérisé en ce que** le réseau d'accès (12) présente une structure en étoile et/ou une structure en anneau et/ou une structure arborescente.

9. Réseau d'accès selon l'une quelconque des revendications précédentes, **caractérisé en ce que** la source lumineuse d'une OLT standard (14) ou d'une ONU standard (16) avec chacune leur longueur d'onde (λ1, λ2) sert de source lumineuse de référence.

10. Réseau d'accès selon l'une quelconque des revendications précédentes, **caractérisé en ce que** le réseau optique passif est un réseau de câbles à fibres optiques.

11. Réseau d'accès selon la revendication précédente, **caractérisé en ce qu'**une amplification optique a lieu dans le réseau de câbles à fibres optiques.

12. Réseau d'accès selon l'une quelconque des revendications précédentes, **caractérisé en ce qu'**une amplification optique a lieu dans les noeuds de distribution optique (14) et/ou dans l'unité de raccordement au réseau optique (16).
